**Europäisches Patentamt**

**European Patent Office**

**Office européen des brevets**

(19)

(11) Veröffentlichungsnummer: **0 060 543**
**A2**

# EUROPÄISCHE PATENTANMELDUNG

(12)

(21) Anmeldenummer: **82102062.5**

(22) Anmeldetag: **13.03.82**

(51) Int. Cl.³: **B 65 B 27/00**, B 65 B 53/02,
B 65 G 57/00

(30) Priorität: **16.03.81 DE 3110061**

(43) Veröffentlichungstag der Anmeldung: **22.09.82**
**Patentblatt 82/38**

(84) Benannte Vertragsstaaten: **AT BE CH DE FR GB IT LI LU NL SE**

(71) Anmelder: **Hellmann GmbH, Hermesstrasse 5, D-3160 Lehrte-Hämelerwald (DE)**

(72) Erfinder: **Hellmann, Joachim, Hermesstrasse 5, D-3160 Lehrte-Hämelerwald (DE)**

(74) Vertreter: **Trapp, Günther, Im Herrenholz 3, D-8520 Erlangen-Buckenhof (DE)**

(54) **Gerät zum Auflegen von Kantenschutzwinkeln auf Stückgüter.**

(57) Die Erfindung bezieht sich auf ein Gerät zum Auflegen von Kantenschutzwinkeln auf die Oberseite von auf einer Palette (1) geladenen Stückgütern (2). Für jede zu schützende Kante ist je ein Magazin (4, 5) für die Kantenschutzwinkel vorhanden. Zwischen den Magazinen (4, 5) ist Raum für die Plazierung einer beladenen Palette (1) und für jedes Magazin (4, 5) ist je eine motorisch verstellbare Transportvorrichtung (8, 9) vorhanden, durch die je ein Winkel im Magazin (4, 5) aufnehmbar, zur Oberseite der Ladung beförderbar und dort ablegbar ist.

ACTORUM AG

EP 0 060 543 A2

# 0060543

Hellmann GmbH

Hermesstraße 5

3160 Lehrte-Hämelerwald

Gerät zum Auflegen von Kantenschutzwinkeln auf Stückgüter

Die Erfindung betrifft ein Gerät zum Auflegen von Kantenschutzwinkeln auf Stückgüter.

Es ist bekannt, auf einer Palette geladene Stückgüter mit einer Haube aus thermoplastischem Material zu überziehen und diese Haube mit Hilfe von Wärmezufuhr zu schrumpfen, so daß sie die Stückgüter fest zusammenhält oder die Ladung durch Umreifung mit Kunststoff- oder Stahlband zu sichern. Zum Schutz der Oberkanten der Stückgutladung werden dabei häufig Kantenschutzwinkel auf diesen Oberkanten aufgelegt. Das Auflegen der Kantenschutzwinkel erfolgt von Hand und stellt daher einen relativ zeitaufwendigen Arbeitsvorgang dar, der eine besondere Bedienungsperson erfordert.

Der Erfindung liegt die Aufgabe zugrunde, ein Gerät der eingangs genannten Art zu schaffen, das es erlaubt. die Kantenschutzwinkel maschinell auf die Oberseite der Stückgutladung aufzulegen.

Diese Aufgabe ist erfindungsgemäß dadurch gelöst, daß für jede zu schützende Kante je ein Magazin für die Kantenschutzwinkel vorhanden ist, daß zwischen den Magazinen Raum für die Plazierung des Stückgutes vorhanden ist und daß für jedes Magazin je eine motorisch verstellbare Transportvorrichtung vorhanden ist, durch die je ein Winkel im Magazin aufnehmbar, zur Kante des Stückgutes beförderbar und dort ablegbar ist. Bei dem erfindungsgemäßen Gerät wird die mit Kantenschutzwinkeln zu versehende

09.03.1982

- 2 -

Stückgutladung in den Raum zwischen den Magazinen gefahren. Das Auflegen der Kantenschutzwinkel erfolgt dann automatisch.

Es ist besonders zweckmäßig, die Transportvorrichtung mit einem pneumatischen Aufnehmer zum Ergreifen eines Kantenschutzwinkels mit Unterdruck zu versehen und den Aufnehmer an einem Halter derart schwenkbar zu lagern, daß je ein Winkel aus seiner Lage im Magazin in eine Lage schwenkbar ist, in der er auf der Oberseite der Ladung auflegbar ist. Dabei ist es möglich, die Kantenschutzwinkel im Magazin in einer Lage zu lagern, die von der Lage abweicht, die die Winkel aufweisen, wenn sie auf der Ladung aufgelegt sind.

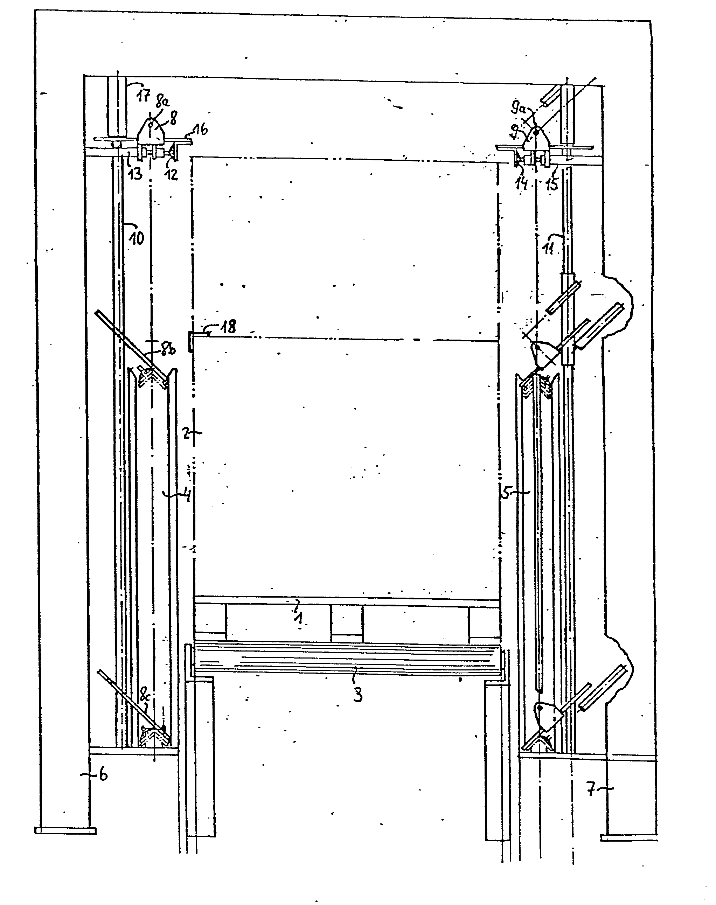

Die Erfindung ist nachfolgend anhand eines in der Zeichnung dargestellten Ausführungsbeispieles näher erläutert.

In der Zeichnung ist eine Palette 1 mit einer Stückgutladung 2, die z.B. aus Steinen bestehen kann, gezeigt, welche auf einer Rollenbahn 3 steht. In der dargestellten Stellung liegt die Palette 1 mit der Stückgutladung 2 zwischen zwei Magazinen 4 und 5 des dargestellten Gerätes, das zwei sich auf dem Fußboden abstützende Säulen 6 und 7, die durch ein Joch verbunden sind, aufweist. In den Magazinen 4 und 5 sind L-förmige Winkel gelagert, die auf die Oberseite der Stückgutladung 2 aufgelegt werden sollen. Hierzu ist an der Säule 6 eine Transportvorrichtung 8 und an der Säule 7 eine Transportvorrichtung 9 gelagert. Die Transportvorrichtung 8 ist auf einer Achse 10 und die Transportvorrichtung 9 auf einer Achse 11 höhenverstellbar gelagert. In der Zeichnung sind die Transportvorrichtungen 8 und 9 in mehreren Lagen dargestellt.

Die Transportvorrichtung 8 weist einen Sauger 12 auf, der mit Hilfe eines Hydraulik- oder Pneumatikmotors 13 verstellbar ist. Analog dazu weist die Transportvorrichtung 9 einen Sauger 14 auf, der mittels eines Hydraulik- oder Pneumatikmotors 15 verstellbar ist. Die Transportvorrichtungen 8 und 9 sind um Achsen 8a und 9a schwenkbar gelagert.

Zum Ergreifen eines Winkels im Magazin 4 wird die Transportvorrichtung 8 um die Achse 8a in die Lage geschwenkt, die mit 8b bzw. 8c bezeichnet ist. Anschließend wird die Transportvorrichtung 8 so weit nach unten gefahren, bis sie mit einem Anschlag 16 an einem Winkel im Magazin 4 anliegt. Bei vollgefülltem Magazin erreicht sie in diesem Fall die Stellung 8b und bei fast leerem Magazin die Stellung 8a. Nach dem Anliegen an einem Winkel im Magazin 4 schiebt der Motor 13 den Saugnapf 12 gegen den freien Schenkel des zu erfassenden Winkels. Durch Unterdruck saugt sich der Saugnapf 12 dort fest. Anschließend bewegt ein ebenfalls hydraulischer, pneumatischer oder elektrischer Motor 17 die Transportvorrichtung 8 mit dem daran gehalterten Winkel nach oben, bis der Winkel über der Ladung 2 liegt. Dann wird die Transportvorrichtung 8 in die Lage geschwenkt, in der der Anschlag 16 waagerecht liegt und anschließend so weit abgesenkt, bis der Winkel, wie dies für den Winkel 18 dargestellt ist, auf der Oberkante der Ladung 2 aufliegt. Mittels des Saugers 12 kann dabei der Winkel noch etwas nach rechts bewegt werden, daß er auch seitlich exakt an der Ladung 2 anliegt.

Die Beförderung der Winkel aus dem Magazin 5 mit Hilfe der Transportvorrichtung 9 erfolgt analog zu der geschilderten Beförderung der Winkel aus dem Magazin 4.

In der Zeichnung sind stirchpunktiert zwei verschieden hohe Ladungen 2 auf der Palette 1 dargestellt. Die Höhe ist dabei für die Wirkungsweise der beschriebenen Aufle-

- 4 -

gevorrichtung für Kantenschutzwinkel unbedeutend, da der Verstellweg der Transportvorrichtungen 8 und 9 entsprechend gewählt werden kann.

Bei dem dargestellten Gerät ist zwischen den Magazinen 4, 5 Raum für die Plazierung jeweils einer beladenen Palette. Es ist denkbar, für jede zu schützende Kante je eine Transportvorrichtung entsprechend den Transportvorrichtungen 8, 9 und je ein Magazin für die aufzulegenden Winkel vorzusehen.

Die Erfindung ist mit Vorteil für folgende Arbeitsverfahren anwendbar:

Zunächst wird eine beladene, aber ungesicherte Palette 1 zwischen die Magazine 4 und 5 eingeschleust und dort mit Kantenschutzwinkeln versehen, die festgehalten werden. Anschließend wird die Palette 1 auf der Rollenbahn 3 um eine kurze Strecke weiterbefördert und dann vollautomatisch mit einem Strahl- oder Kunststoffband, einer Kordel oder einer Schnur, umreift. Anschließend erfolgt der Weitertransport der Palette 1 auf der Rollenbahn 3 um eine weitere Strecke, wobei die aufgelegten Kantenschutzwinkel losgelassen sind, da sie durch die erste Umreifung gesichert sind. Nunmehr erfolgt eine zweite vollautomatische Umreifung und anschließend kann die fertige, gesicherte Palette ausgeschleust werden.

Die Stückgüter müssen nicht auf einer Palette angeordnet sein und oben mit Kantenschutzwinkeln versehen werden. Es ist auch denkbar, daß die Kantenschutzwinkel seitlich an die Stückgüter angestellt werden, die beispielsweise quaderförmig gestapelt sind. In diesem Fall werden dann seitlich vier Kantenschutzwinkel automatisch angebracht, so daß eine anschließende Umreifung der Stückgüter möglich ist.

1 Figur, 4 Patentansprüche

- 5 -

## Patentansprüche

1. Gerät zum Auflegen von Kantenschutzwinkeln auf Stück- güter (2), d a d u r c h   g e k e n n z e i c h n e t, daß für jede zu schützende Kante je ein Magazin (4, 5) für die Kantenschutzwinkel vorhanden ist, daß zwischen den Magazinen (4, 5) Raum für die Plazierung des Stückgutes (2) vorhanden ist und daß für jedes Magazin (4, 5) je eine motorisch verstellbare Transportvorrichtung (8, 9) vorhanden ist, durch die je ein Winkel im Magazin (4, 5) aufnehmbar, zur Kante des Stückgutes beförderbar und dort ablegbar ist.

2. Gerät nach Anspruch 1, d a d u r c h   g e k e n n - z e i c h n e t,  daß die Transportvorrichtung (8, 9) einen pneumatischen Aufnehmer (12, 13, 14, 15) zum Ergreifen eines Kantenschutzwinkels mit Unterdruck aufweist.

3. Gerät nach Anspruch 2, d a d u r c h   g e k e n n - z e i c h n e t,  daß der Aufnehmer (12, 13, 14, 15) einen hydraulisch oder pneumatisch verstellbaren Sauger (12, 14) zum Festhalten des Winkels aufweist.

4. Gerät nach einem der Ansprüche 1 bis 3, d a d u r c h   g e k e n n z e i c h n e t,  daß die Transportvorrich- tung derart schwenkbar gelagert ist, daß je ein Winkel aus seiner Lage im Magazin (4, 5) in eine Lage schwenkbar ist, in der er auf der Oberseite der Ladung (2) auf- legbar ist.

0060543